# EUROPEAN PATENT SPECIFICATION

(11) **EP 2 891 779 B1**
(45) Date of publication and mention of the grant of the patent: **18.11.2020**
(21) Application number: 13832979.2
(22) Date of filing: 30.08.2013
(51) Int. Cl.: F02D 41/30, F02M 21/02, F02D 41/00, F02B 25/04

(54) **UNIFLOW SCAVENGING TWO-CYCLE ENGINE**
ZWEITAKTMOTOR MIT LÄNGSSPÜLUNG
MOTEUR À DEUX TEMPS À BALAYAGE ÉQUICOURANT

(30) Priority: 31.08.2012 JP 2012191121
(43) Date of publication of application: 08.07.2015
(73) Proprietor: IHI Corporation, Tokyo 135-8710 (JP)
(72) Inventor: MASUDA Yutaka, Tokyo 135-8710 (JP); YAMADA Takayuki, Tokyo 135-8710 (JP); HIROSE Takayuki, Tokyo 135-8710 (JP); KUGE Takahiro, Tokyo 135-8710 (JP); YAMADA Takeshi, Tokyo 135-8710 (JP)
(74) Representative: TBK
(86) International application number: PCT/JP2013/073359
(87) International publication number: WO 2014/034865

(56) References cited:
- EP-A1- 0 586 775
- EP-A1- 0 651 151
- JP-A- H07 208 171
- JP-A- H10 252 608
- JP-A- H10 252 608
- JP-A- 2012 036 780
- JP-A- 2012 077 742
- JP-A- 2012 077 742
- JP-A- 2012 154 188
- JP-A- 2012 154 188
- JP-B2- 3 046 897
- JP-U- S 604 761
- JP-U- H0 475 158

## Description

### Technical Field

The present invention relates to a uniflow-scavenging-type two-cycle engine for burning a premixed gas that is generated by injecting a fuel gas to an active gas drawn in from scavenging ports.

Priority is claimed on Japanese Patent Application No. 2012-191121, filed on August 31, 2012.

### Background Art

For example, as shown in Patent Document 1, a uniflow-scavenging-type two-cycle engine (two-stroke engine) used also for an engine of a ship has an exhaust port provided at a first end of its cylinder in the stroke direction of its piston and has scavenging ports provided at a second end of its cylinder in the stroke direction of its piston. When, in the intake (induction) process, an active gas is drawn in from the scavenging ports to a combustion chamber, an exhaust gas generated by the combustion action is exhausted, as if being pushed out, by the drawn in active gas.

In this case, a premixed gas is generated by injecting a fuel gas to the drawn in the active gas, and the generated premixed gas is compressed, to thereby obtain a combustion action. With an explosive pressure generated by the combustion action, the piston reciprocates in the cylinder. To achieve this, the cylinder is provided with a fuel injection valve that injects a fuel gas. In two-cycle engines with a large diameter such as two-cycle engines for ships, a plurality of fuel injection valves are provided in the circumferential direction of the cylinder, and the fuel gas is injected simultaneously from the fuel injection valves.

### Document of Related Art

### Patent Document

Patent Document 1: Japanese Unexamined Patent Application, First Publication JP 2012-77742 A

JP 2012 154188 A discloses a uniflow-scavenging-type two-cycle engine having the features of the preamble of claim 1. In this engine, into a combustion chamber of a cylinder, fuel gas is injected by fuel injection valves and an inactive substance is injected by inactive substance fuel injection valves.

EP 0 651 151 A1 discloses an engine having fuel injection valves which are oriented in the same direction.

JP H10 252608 A discloses an internal combustion engine having a plurality of fuel injection valves. The orientation directions of fuel injection valves are designed such that thin film form sprays injected by the fuel injection valves do not intersect each other.

EP 0 586 775 A1 discloses a method for injecting fuel into a Diesel engine. In this Diesel engine, two injection nozzles are disposed on a cylinder lid body of a combustion space so as to face each other in the radial direction.

JP 3 046897 B2 discloses a further internal combustion engine comprising a first fuel injection valve and a second fuel injection valve in a cylinder. The first fuel injection valve injects toward a horizontal and lower direction, and the second fuel injection valve also injects toward a horizontal and lower direction.

However, in the conventional two-cycle engines provided with a plurality of fuel injection valves, there are cases where it is not possible to spread a fuel gas widely over the whole internal area of the cylinder because the fuel gas is injected toward the center of the cylinder from all the fuel injection valves. If, in the two-cycle engines, a fuel gas can be spread widely over the whole internal area of the cylinder, then it is possible to further improve the operational performance. Therefore, further improvement in how to inject a fuel gas is desired.

### Summary of Invention

### Technical Problem

Therefore, it is an object of the present invention to provide a uniflow-scavenging-type two-cycle engine that spreads a fuel gas widely over the whole internal area of a cylinder, to thereby make it possible to further improve the operational performance.

### Solution to Problem

The object is solved by an engine of claim 1. Further developments are stated in the dependent claims. Thus, an uniflow-scavenging-type two-cycle engine according to the present invention includes: a cylinder in which a combustion chamber is formed; a piston that slides in the cylinder; an exhaust port that is provided at a first end of the cylinder in a stroke direction of the piston; an exhaust valve that opens and closes the exhaust port; a scavenging port that is provided in an inner circumferential surface of a second end of the cylinder in the stroke direction of the piston and draws in an active gas into the combustion chamber in accordance with a sliding movement of the piston; and a plurality of fuel injection valves that inject a fuel gas to the active gas, which has been drawn in from the scavenging port to the combustion chamber, to thereby generate a premixed gas, wherein the fuel injection valves are provided in a manner spaced from each other with a predetermined distance in a circumferential direction in the inner circumferential surface of the cylinder between the exhaust port and the scavenging port, and the fuel injection valves at least include: a first fuel injection valve that injects a fuel gas in a direction along a swirling flow of the active gas drawn in into the cylinder; and a second fuel injection valve that injects a fuel gas toward a direction closer to a central axis of the cylinder than the direction of the fuel gas from the first fuel injection valve, wherein the fuel gas from the first fuel injection valve is injected toward horizontal direction, and the fuel gas from the second injection valve is injected in a direction vertically upper than the horizontal direction.

The uniflow-scavenging-type two-cycle engine may further include a fuel injection control unit that controls the fuel injection valve, to thereby cause a fuel gas to be injected from the fuel injection valves, and the fuel injection control unit may cause a difference in injection control of the fuel gas between the first fuel injection valve and the second fuel injection valve.

The fuel injection control unit may cause a difference in the time to start an injection of the fuel gas between the first fuel injection valve and the second fuel injection valve.

The fuel injection control unit may vary the number of the fuel injection valves that inject the fuel gas in accordance with an operational situation of the engine.

If a load of the engine is less than a preset threshold value, then the fuel injection control unit may cause the fuel gas to be injected from the first fuel injection valve; and if the load of the engine is not less than the preset threshold value, then the fuel injection control unit may cause the fuel gas to be injected from the first fuel injection valve and the second fuel injection valve.

An injection direction of the fuel gas injected from the first fuel injection valve and an injection direction of the fuel gas injected from the second fuel injection valve may be symmetrical with respect to the central axis of the cylinder.

The first fuel injection valve and the second fuel injection valve have an injection angle of the fuel gas different from each other with respect to the stroke direction of the piston.

### Effects of the Invention

According to the uniflow-scavenging-type two-cycle engine of the present invention, a fuel gas is spread widely over the whole internal area of the cylinder, to thereby make it possible to further improve the operational performance.

### Brief Description of the Drawings

FIG. 1 is an explanatory diagram showing a general structure of a uniflow-scavenging-type two-cycle engine.
FIG. 2 is an explanatory diagram showing an operation of each control unit.
FIG. 3A is a diagram explaining the directions in which a fuel gas is injected.
FIG. 3B is a diagram explaining the directions in which the fuel gas is injected.
FIG. 3C is a diagram explaining the directions in which the fuel gas is injected.
FIG. 4 is a flow chart explaining an example of control of the fuel injection valves by the fuel injection control unit.
FIG. 5 is a flow chart explaining another example of control of the fuel injection
valves by the fuel injection control unit.

### Description of Embodiments

Hereunder is a detailed description of a preferred embodiment of the present invention with reference to the appended drawings. Dimensions, materials, specific numerical values, and the like shown in the embodiment of the present invention are merely examples for making the understanding of the invention easy, and hence, do not limit the present invention unless otherwise specified. In the present specification and the drawings, elements with substantially the same function or structure are denoted by the same reference symbols, and are not repetitiously explained. Furthermore, illustrations of those elements that are not directly related to the present invention are omitted.

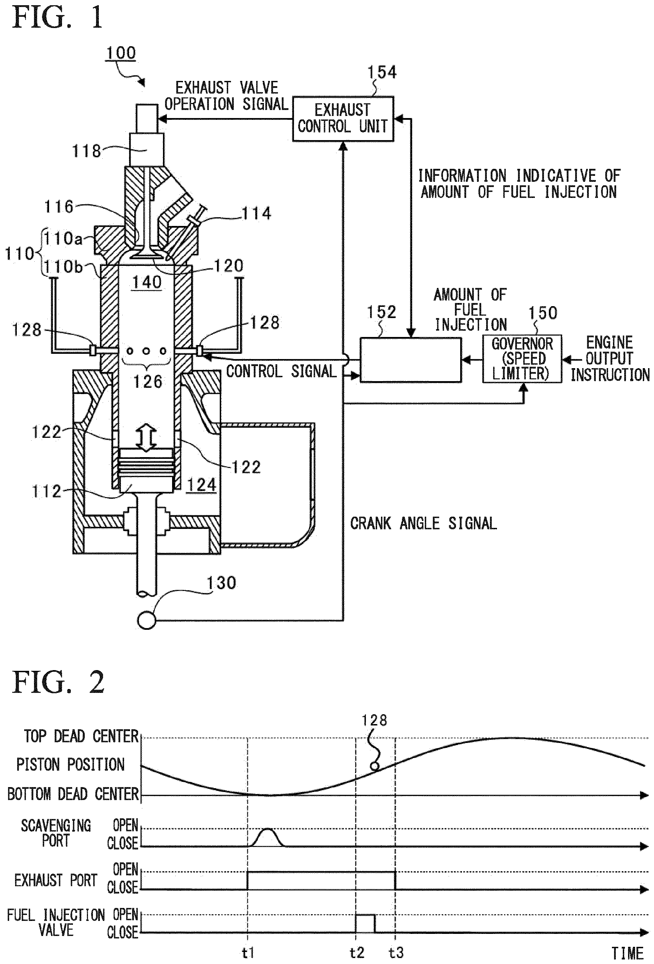

FIG. 1 is an explanatory diagram showing a general structure of a uniflow-scavenging-type two-cycle engine 100. The uniflow-scavenging-type two-cycle engine 100 of the present embodiment is used for, for example, ships or the like. To be more specific, the uniflow-scavenging-type two-cycle engine 100 includes: a cylinder 110 (a cylinder head 110a, a cylinder block 110b); a piston 112; a pilot injection valve 114; an exhaust port 116; an exhaust valve drive device 118; an exhaust valve 120; scavenging ports 122; a scavenging chamber 124; fuel injection ports 126; fuel injection valves 128; a rotary encoder 130; and a combustion chamber 140, and is controlled by control units such as a governor (speed limiter) 150, a fuel injection control unit 152, and an exhaust control unit 154.

In the uniflow-scavenging-type two-cycle engine 100, the piston 112, which is coupled to a crosshead (not shown in the figure), reciprocates slidably in the cylinder 110 through four sequential processes of: intake (induction), compression, combustion, and exhaust. In this crosshead-type piston 112, it is possible to form a stroke in the cylinder 110 comparatively long, and to cause the crosshead to receive a lateral pressure acting on the piston 112. Therefore, it is possible to obtain a high-power output of the uniflow-scavenging-type two-cycle engine 100. Furthermore, because the cylinder 110 and a crank chamber (not shown in the figure) in which the crosshead is contained are separated from each other, it is possible to prevent deterioration due to contamination even when low-grade fuel oil is used.

The pilot injection valve 114 is provided in the cylinder head 110a above a top dead center of the piston 112, which is a first end of the cylinder 110 in the stroke direction. The pilot injection valve 114 injects a proper amount of fuel oil at a desired time in the engine cycle. The fuel oil is spontaneously ignited by the heat of the combustion chamber 140, which is surrounded by the cylinder head 110a, the cylinder liner of the cylinder block 110b, and the piston 112, and burns in a short amount of time, to thereby raise the combustion chamber 140 extremely high in temperature. Therefore, it is possible to securely burn the premixed gas including the fuel gas at a desired time.

The exhaust port 116 is an opening provided at the first end of the cylinder 110 in the stroke direction of the piston 112, namely, at the top of the cylinder head 110a above the top dead center of the piston 112. The exhaust port 116 is opened and closed for exhausting the exhaust gas after combustion that has been generated in the cylinder 110. The exhaust valve drive device 118 slides the exhaust valve 120 up and down at predetermined times to open and close the exhaust port 116. Thus, the exhaust gas exhausted via the exhaust port 116 is exhausted to the outside after, for example, it is supplied to the turbine of the supercharger (not shown in the figure).

The scavenging ports 122 are openings provided in an inner circumferential surface (inner circumferential surface of the cylinder block 110b) at a second end of the cylinder 110 in the stroke direction of the piston 112. The scavenging ports 122 draw in an active gas into the cylinder 110 in accordance with the sliding movement of the piston 112. The active gas includes oxygen, oxidant such as ozone, or mixed gas of these (air, for example). The scavenging chamber 124 is filled with an active gas (air, for example) that has been pressurized by the compressor of a supercharger (not shown in the figure). With a difference in pressure between the scavenging chamber 124 and the cylinder 110, the active gas is drawn in from the scavenging ports 122. The pressure of the scavenging chamber 124 may be substantially constant. However, if the pressure of the scavenging chamber 124 changes, the scavenging ports 122 may be provided with a pressure gauge, and other parameters such as an amount of injection of the fuel gas may be controlled in accordance with the measured value.

The fuel injection ports 126 are a plurality of (eight, in the present embodiment) openings provided in a manner spaced from each other with a predetermined distance in a substantially circumferential direction (not only in the exact circumferential direction but displacement in the stroke direction is allowed) in the inner circumferential surface of the cylinder 110 (between the exhaust port 116 and the scavenging ports 122).

Each fuel injection valve 128 is arranged in each fuel injection port 126. On receiving an instruction from the fuel injection control unit 152, the fuel injection valve 128 injects a fuel gas that is, for example, a gasified LNG (liquefied natural gas). Thus, a fuel gas is supplied to the internal area of the cylinder 110. The fuel gas is not limited to LNG, but a gasified version of, for example, LPG (liquefied petroleum gas), light oil, heavy oil, or the like may be used.

The rotary encoder 130 is provided in a crank mechanism (not shown in the figure), and detects an angle signal of the crank (hereinafter, referred to as crank angle signal).

Based on an engine output instruction value that has been input from an upper-level control device and on the number of revolution of the engine that is specified by the crank angle signal from the rotary encoder 130, the governor 150 derives an amount of fuel injection and then outputs the amount to the fuel injection control unit 152.

Based on the information indicative of the amount of fuel injection that has been input from the governor 150 and on the crank angle signal from the rotary encoder 130, the fuel injection control unit 152 controls the fuel injection valves 128 by means of a control signal.

Based on the information indicative of the amount of fuel injection from the fuel injection control unit 152 and on the crank angle signal from the rotary encoder 130, the exhaust control unit 154 outputs an exhaust valve operation signal to the exhaust valve drive device 118. Hereunder is a description of the operation of each control unit in the engine cycle of the uniflow-scavenging-type two-cycle engine 100.

FIG. 2 is an explanatory diagram showing an operation of each control unit. As shown in FIG. 2, in the expansion process after the combustion process, the exhaust port 116 and the scavenging ports 122 are in a closed state, and the combustion chamber 140 (cylinder 110) is filled with an exhaust gas.

When the piston 112 is lowered to be brought close to the bottom dead center due to an explosive pressure produced by the combustion action in the combustion chamber 140, the exhaust control unit 154 opens the exhaust valve 120 via the exhaust valve drive device 118. At the same time, following the sliding movement of the piston 112, the scavenging ports 122 open (t1 shown in FIG. 2). As a result, an active gas is drawn in from the scavenging ports 122, and the active gas moves up while forming a swirl (swirling flow) for promoting a mixture of the fuel gas. This causes the exhaust gas in the combustion chamber 140 (cylinder 110) to be pushed out from the exhaust port 116.

In the compression process in which the piston 112 moves up from the bottom dead center toward the top dead center, the scavenging ports 122 are closed to stop the intake of the active gas. At this time the exhaust control unit 154 keeps the exhaust valve 120 in an open state. Therefore, with an upward movement of the piston 112, the exhaust gas in the combustion chamber 140 (cylinder 110) continues to be exhausted from the exhaust port 116. In this period of time, based on the information indicative of the amount of fuel injection that has been input from the governor 150, on the number of revolution of the engine that has been derived from the crank angle signal from the rotary encoder 130, and on other factors, the fuel injection control unit 152 causes a fuel gas to be injected from the fuel injection valves 128 into the cylinder 110 when the piston 112 is closer to the bottom dead center than the fuel injection valves 128 (t2 shown in FIG. 2).

As a result, the fuel gas is injected to the active gas drawn in from the scavenging ports 122, which generates a premixed gas in the combustion chamber 140 (cylinder 110). After that, when the piston 112 further moves up to be closer to the top dead center than the fuel injection valves 128, the exhaust control unit 154 closes the exhaust valve 120 to close the exhaust port 116 (t3 shown in FIG. 2).

Thus, with the premixed gas burning in the combustion chamber 140, the processes of exhaust, intake (induction), compression, combustion, and expansion are repeated. Although it depends on the operational situation of the engine, but for example, if in a rated operation of the engine, the fuel gas is injected locally, leaving some part of the cylinder 110 (combustion chamber 140) not filled with the fuel gas, then there may be knocking, pre-ignition, or the like in some cases, resulting in possible lowering of the operational performance. Therefore, in the present embodiment, the fuel injection valves 128 are structured as follows in order to cause the fuel gas to spread widely over the whole internal area of the cylinder 110 (combustion chamber 140).

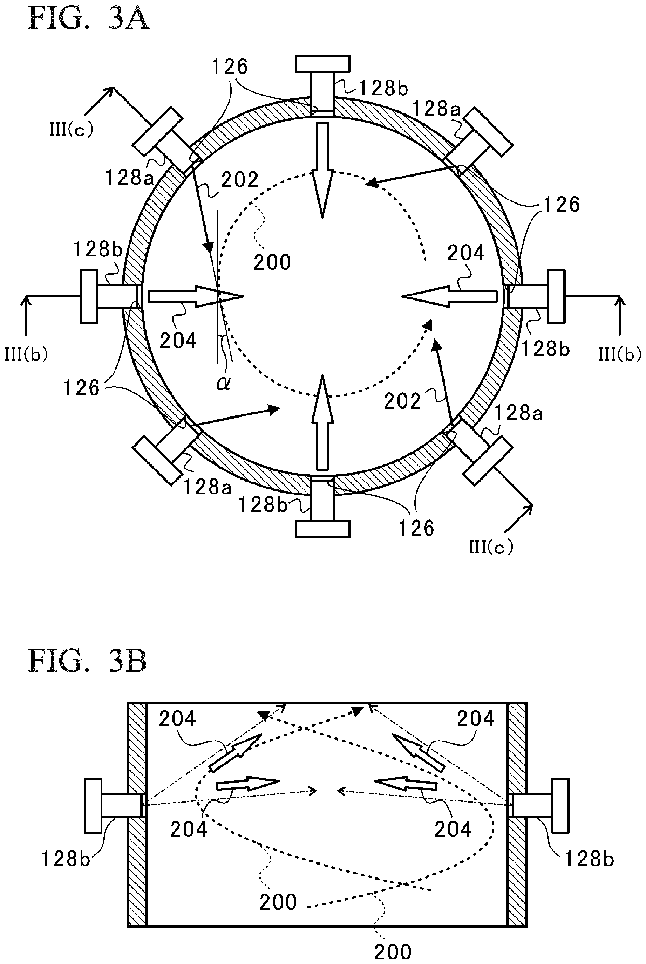

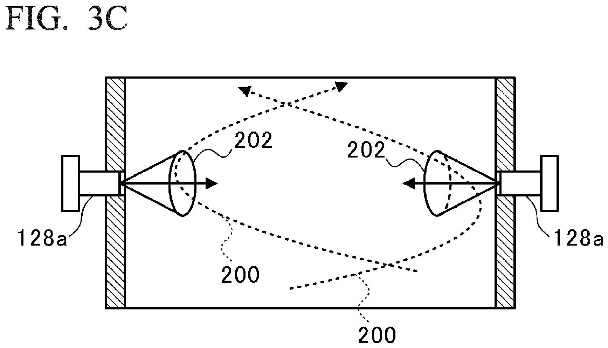

FIG. 3A, FIG. 3B, and FIG. 3C are diagrams explaining injection directions of the fuel gas. FIG. 3A shows a cross-section of the cylinder 110, horizontally taken at a position where the fuel injection ports 126 are formed. FIG. 3B shows a cross-section of FIG. 3A, taken along the III(b)-III(b) line. FIG. 3C shows a cross-section of FIG. 3A, taken along the III(c)-III(c). As shown in FIG. 3A, the uniflow-scavenging-type two-cycle engine 100 of the present embodiment has the cylinder 110 in which the eight fuel injection ports 126 are formed. Each of the fuel injection ports 126 is provided with the fuel injection valve 128 (denoted with reference symbol 128a or 128b in FIG. 3A, FIG. 3B, and FIG. 3C).

The fuel injection valves 128 include: first fuel injection valves 128a that inject a fuel gas in directions along a swirl, namely a swirling flow (broken-line arrow(s) denoted with reference symbol 200 in FIG. 3A, FIG. 3B, and FIG. 3C) of the active gas drawn in into the cylinder 110 (combustion chamber 140) (namely, in directions of solid-line arrows denoted with reference symbol 202 in FIG. 3A, FIG. 3B, and FIG. 3C); and second fuel injection valves 128b that inject a fuel gas toward directions closer to the central axis of the cylinder 110 than the directions by the first fuel injection valves 128a (namely, toward the central axis of the cylinder 110, the directions of hollow arrows denoted with reference symbol 204 in FIG. 3A, FIG. 3B, and FIG. 3C in the present embodiment).

Here, the "direction along the swirling flow (swirl) of the active gas" is not limited to the case where the flow direction of the active gas completely coincides with the injection direction of the fuel gas. It is permissible if only the relationship is provided in which the fuel gas smoothly moves into the flow of the active gas. To be more specific, it is permissible if only the angle α (see FIG. 3A) formed between the direction of the swirling flow of the active gas (flow direction) and the injection direction of the fuel gas in the horizontal cross-section of the cylinder 110 is 0°<α<90°. At this time, it is permissible if only the fuel gas injected from the second fuel injection valve 128b is directed closer to the central axis of the cylinder 110 than the fuel gas injected from the first fuel injection valve 128a.

Here, the second fuel injection valves 128b inject the fuel gas toward the central axis of the cylinder 110 toward a direction vertically upper than the horizontal direction, as shown in FIG. 3B. The first fuel injection valves 128a inject the fuel gas toward the horizontal direction, as shown in FIG. 3C. However, in non-claimed alternative configurations, a vertical injection angle of the fuel gas injected from the first fuel injection valve 128a and that injected from the second fuel injection valve 128b may be differently set: for example, the fuel gas may be injected from the first fuel injection valve 128a in a direction vertically upper than the horizontal direction, and the fuel gas may be injected from the second fuel injection valve 128b toward the horizontal direction.

Taking into consideration the fact that the fuel gas injected from the first fuel injection valve 128a and that injected from the second fuel injection valve 128b interfere with each other, it is desirable that the first fuel injection valve 128a and the second fuel injection valve 128b have different injection angles of the fuel gas with respect to the stroke direction of the piston 112. Furthermore, a test result has been obtained that injecting the fuel gas from the first fuel injection valve 128a toward the horizontal direction and injecting the fuel gas from the second fuel injection valve 128b in the direction vertically upper than the horizontal direction as is the case with the present embodiment make it more likely to uniform the fuel gas in the cylinder 110.

Although a detailed description is omitted, at a front end of each of the first fuel injection valves 128a and the second fuel injection valves 128b an opening is provided for injecting a fuel gas. At this time, in the first fuel injection valve 128a, the opening provided at its front end is inclined in the direction along the swirl (swirling flow). This makes it possible for the fuel gas to be injected in the directions as shown in the figure. However, it is permissible only if the first fuel injection valve 128a and the second fuel injection valve 128b are capable of injecting the fuel gas in a desired direction, and their specific structures may be appropriately designed.

As shown in FIG. 3A, in the present embodiment, the first fuel injection valves 128a and the second fuel injection valves 128b are arranged alternately at equal spaces in the circumferential direction of the cylinder 110. Therefore, the injection directions of the fuel gases that are injected by the first fuel injection valves 128a and those that are injected by the second fuel injection valves 128b are symmetrical with respect to the central axis of the cylinder 110.

Thus, the fuel injection valves 128 include the first fuel injection valves 128a and the second fuel injection valves 128b. Therefore, even if all the fuel injection valves 128 inject the fuel gas at the same time, the fuel gases injected from the adjacent fuel injection valves 128 are unlikely to interfere with each other. This makes it possible to spread the fuel gas widely over the whole internal area of the cylinder 110 (combustion chamber 140). Therefore, compared with the conventional ones, it is possible to improve the operational performance.

Heretofore, the description has been given on the precondition that the fuel gas is injected simultaneously from the first fuel injection valves 128a and the second fuel injection valves 128b. However, if the fuel injection control unit 152 performs, for example, the following control, it is possible to further improve the uniformity of the fuel gas in the cylinder 110 (combustion chamber 140).

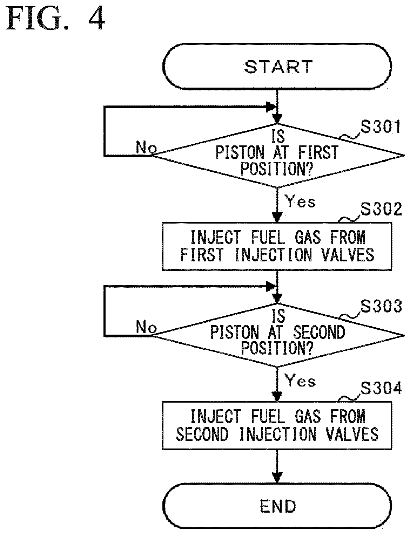

FIG. 4 is a flow chart showing an example of control of the fuel injection valves 128 by the fuel injection control unit 152. The processing shown in FIG. 4 starts when, for example, the aforementioned information indicative of the amount of fuel injection is input from the governor 150 to the fuel injection control unit 152.

### (Step S301)

When the aforementioned information indicative of the amount of fuel injection is input from the governor 150, the fuel injection control unit 152 determines whether or not the piston 112 is at a first position that is closer to the bottom dead center than the fuel injection valves 128 based on the signal that has been input from the rotary encoder 130. If the piston 112 has not reached the first position yet (No in Step S301), then the fuel injection control unit 152 waits until the piston 112 reaches the first position.

### (Step S302)

If the fuel injection control unit 152 determines that the piston 112 has reached the first position based on the signal that has been input from the rotary encoder 130 (Yes in Step S301), then a predetermined amount of fuel gas is injected from the first fuel injection valves 128a out of the fuel injection valves 128.

### (Step S303)

Based on the signal that has been input from the rotary encoder 130, the fuel injection control unit 152 determines whether or not the piston 112 is at a second position that is closer to the top dead center than the first position and also closer to the bottom dead center than the fuel injection valves 128. If the piston 112 has not reached the second position yet (No in Step S303), then the fuel injection control unit 152 waits until the piston 112 reaches the second position.

### (Step S304)

If determining that the piston 112 has reached the second position based on the signal that has been input from the rotary encoder 130 (Yes in Step S303), then a predetermined amount of fuel gas is injected from the second fuel injection valves 128b out of the fuel injection valves 128.

According to the above processing, the fuel injection control unit 152 causes a difference in the time to start the fuel gas between the first fuel injection valves 128a and the second fuel injection valves 128b. This makes the fuel gas injected from the first fuel injection valves 128a and that injected from the second fuel injection valves 128b more unlikely to interfere with each other, which makes it possible to improve the uniformity of the fuel gas in the cylinder 110 (combustion chamber 140).

Here, after the fuel gas has been injected from the first fuel injection valves 128a, the fuel gas is injected from the second fuel injection valves 128b. However, after the fuel gas has been injected from the second fuel injection valves 128b, the fuel gas may be injected from the first fuel injection valves 128a. In either case, causing a difference in the time to start the injection of the fuel gas between the first fuel injection valves 128a and the second fuel injection valves 128b makes it possible to improve the uniformity of the fuel gas in the cylinder 110 (combustion chamber 140).

According to the uniflow-scavenging-type two-cycle engine 100 of the present embodiment, the optimal combustion action is brought about in accordance with the state of the operation of the engine.

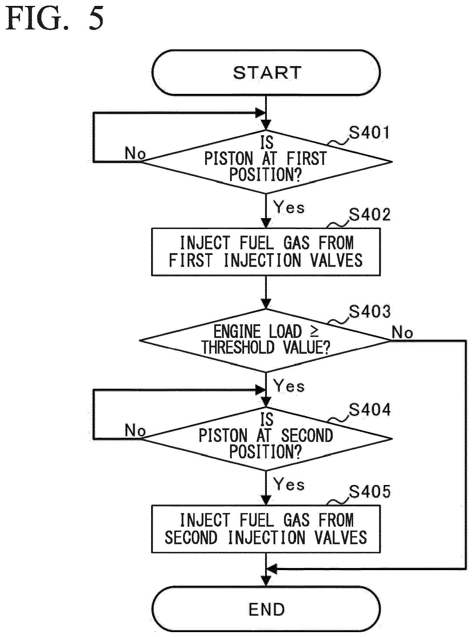

FIG. 5 is a flow chart showing another example of control of the fuel injection valves 128 by the fuel injection control unit 152. The processing shown in FIG. 5 starts when, for example, the aforementioned information indicative of the amount of fuel injection is input from the governor 150 to the fuel injection control unit 152.

### (Step S401)

When the aforementioned information indicative of the amount of fuel injection is input from the governor 150, the fuel injection control unit 152 determines whether or not the piston 112 is at a first position that is closer to the bottom dead center than the fuel injection valves 128 based on the signal that has been input from the rotary encoder 130. If the piston 112 has not reached the first position yet (No in Step S401), then the fuel injection control unit 152 waits until the piston 112 reaches the first position.

### (Step S402)

If the fuel injection control unit 152 determines that the piston 112 has reached the first position based on the signal that has been input from the rotary encoder 130 (Yes in Step S401), then a predetermined amount of fuel gas is injected from the first fuel injection valves 128a out of the fuel injection valves 128.

### (Step S403)

Based on the information related to the amount of fuel injection or the like that has been input from the governor 150, the fuel injection control unit 152 determines whether an engine load is not less than a preset threshold value or not. If the engine load is determined to be not less than the threshold value, then the process moves to Step S404. If the engine load is determined to be less than the threshold value (No in Step S403), then the processing is terminated.

### (Step S404)

In Step S403 described above, if the engine load is determined to be not less than the threshold value (Yes in Step S403), then the fuel injection control unit 152 determines whether or not the piston 112 is at a second position that is closer to the top dead center than the first position and also closer to the bottom dead center than the fuel injection valves 128 based on the signal that has been input from the rotary encoder 130. If the piston 112 has not reached the second position yet (No in Step S404), then the fuel injection control unit 152 waits until the piston 112 reaches the second position.

### (Step S405)

If determining that the piston 112 has reached the second position based on the signal that has been input from the rotary encoder 130 (Yes in Step S404), then a predetermined amount of fuel gas is injected from the second fuel injection valves 128b out of the fuel injection valves 128.

According to the above processing, in accordance with the load of the engine, the fuel injection control unit 152 causes the first fuel injection valves 128a to inject the fuel gas, or causes both of the first fuel injection valves 128a and the second fuel injection valves 128b to inject the fuel gas. Namely, with the number of fuel injection valves 128 for injecting the fuel gas being varied in accordance with the operational situation of the engine, it is possible to inject the optimal amount of fuel gas at desired times over the optimal period of time. Especially, in the case where the first fuel injection valves 128a and the second fuel injection valves 128b are alternately arranged as described above, it is possible to further decrease the interference between the fuel gases injected from the adjacent fuel injection valves 128 when the fuel gas is injected only from the first fuel injection valves 128a.

As an example of control of the fuel injection control unit 152, the case has been described where, if the load of the engine is less than a predetermined threshold value, then the fuel gas is injected from the first fuel injection valves 128a and where, if the load of the engine is not less than the predetermined threshold value, then the fuel gas is injected from the first fuel injection valves 128a and the second fuel injection valves 128b. However, for example, in a state of a rated operation of the engine, the fuel gas may preferably be spread widely and uniformly over the whole internal area of the cylinder 110; and if the temperature of the combustion chamber 140 is low at the time such as the start of the engine, then the fuel gas may preferably be injected locally in order to securely obtain the combustion action. Thus, in accordance with the operational situation of the engine, the fuel injection control unit 152 causes an appropriate difference in the injection control of the fuel gas between the first fuel injection valves 128a and the second fuel injection valves 128b, to thereby make a normal and stable operation always available.

While a preferred embodiment of the present invention has been described with reference to the appended drawings, the present invention is not limited to this embodiment. It is obvious that those skilled in the art can conceive a variety of modifications and alterations within the range described in the claims. Therefore, it should be understood that those modifications and alterations belong to the technical scope of the present invention.

For example, in the aforementioned embodiment, the number of the first fuel injection valves 128a and the number of the second fuel injection valves 128b are the same. However, the number of the first fuel injection valves 128a and the number of the second fuel injection valves 128b may be different. Furthermore, their arrangement is not particularly limited.

### Industrial applicability

The present invention can be utilized as a uniflow-scavenging-type two-cycle engine that burns a premixed gas generated by injecting a fuel gas to an active gas drawn in from scavenging ports. Furthermore, the fuel gas is spread widely over the whole internal area of the cylinder, to thereby further improve the operational performance.

### Description of Reference Signs

- 100:: uniflow-scavenging-type two-cycle engine
- 110:: cylinder
- 112:: piston
- 116:: exhaust port
- 120:: exhaust valve
- 122:: scavenging port
- 128:: fuel injection valve
- 128a:: first fuel injection valve
- 128b:: second fuel injection valve
- 140:: combustion chamber
- 152:: fuel injection control unit

## Claims

1. A uniflow-scavenging-type two-cycle engine (100), comprising:
a cylinder (110) in which a combustion chamber (140) is formed;
a piston (112) that slides in the cylinder (110);
an exhaust port (116) that is provided at a first end of the cylinder (110) in a stroke direction of the piston (112);
an exhaust valve (120) that opens and closes the exhaust port (116);
a scavenging port (122) that is provided in an inner circumferential surface of a second end of the cylinder (110) in the stroke direction of the piston (112) and draws in an active gas into the combustion chamber (140) in accordance with a sliding movement of the piston (112); and
a plurality of fuel injection valves (128) that inject a fuel gas to the active gas, which has been drawn in from the scavenging port (122) to the combustion chamber (140), to thereby generate a premixed gas,
wherein
the fuel injection valves (128) are provided with a plurality of openings provided in a manner spaced from each other with a predetermined distance in a circumferential direction in the inner circumferential surface of the cylinder (110) between the exhaust port (116) and the scavenging port (122), and the fuel injection valves (128) at least comprise:
a first fuel injection valve (128a) configured to inject a fuel gas in a direction along a swirling flow of the active gas drawn in into the cylinder (110), wherein the fuel gas from the first injection valve (128a) is injected toward horizontal direction;
**characterized in that**
the fuel injection valves (128) further comprise at least a second fuel injection valve (128b) configured to inject a fuel gas toward a direction closer to a central axis of the cylinder (110) than the direction of the fuel gas from the first fuel injection valve (128a), wherein the fuel gas from the second fuel injection valve (128b) is injected in a direction vertically upper than the horizontal direction.

2. The uniflow-scavenging-type two-cycle engine (100) according to Claim 1, further comprising:
a fuel injection control unit (152) configured to control the fuel injection valve, to thereby cause a fuel gas to be injected from the fuel injection valves (128),
wherein the fuel injection control unit (152) is configured to cause a difference in injection control of the fuel gas between the first fuel injection valve (128a) and the second fuel injection valve (128b).

3. The uniflow-scavenging-type two-cycle engine (100) according to Claim 2,
wherein the fuel injection control unit (152) is configured to control a difference in a time to start an injection of the fuel gas between the first fuel injection valve (128a) and the second fuel injection valve (128b).

4. The uniflow-scavenging-type two-cycle engine (100) according to Claim 2 or Claim 3,
wherein the fuel injection control unit (152) is configured to vary a number of the fuel injection valves (128) that inject the fuel gas in accordance with an operational situation of the engine (100).

5. The uniflow-scavenging-type two-cycle engine (100) according to Claim 4,
wherein the fuel injection control unit (152) is configured such that
if a load of the engine (100) is less than a preset threshold value, then the fuel injection control unit (152) causes the fuel gas to be injected from the first fuel injection valve (128a) and
if the load of the engine (100) is not less than the preset threshold value, then the fuel injection control unit (152) causes the fuel gas to be injected from the first fuel injection valve (128a) and the second fuel injection valve (128b).

6. The uniflow-scavenging-type two-cycle engine (100) according to any one of Claims 1 to 5,
wherein an injection direction of the fuel gas injected from the first fuel injection valve (128a) and an injection direction of the fuel gas injected from the second fuel injection valve (128b) are symmetrical with respect to the central axis of the cylinder (110).

## Patentansprüche

1. Zweitaktverbrennungsmotor (100) der Art mit Spülen in einer Richtung, mit:
einem Zylinder (110), in dem eine Verbrennungskammer (140) ausgebildet ist;
einem Kolben (112), der in dem Zylinder (110) gleitet;
einem Auslassanschluss (116), der an einem ersten Ende des Zylinders (110) in einer Hubrichtung des Kolbens (112) vorgesehen ist;
einem Auslassventil (120), das den Auslassanschluss (116) öffnet und schließt;
einem Spülanschluss (122), der an einer Innenumfangsfläche eines zweiten Endes des Zylinders (110) in der Hubrichtung des Kolbens (112) vorgesehen ist und ein Aktivgas in die Verbrennungskammer (140) gemäß einer Gleitbewegung des Kolbens (112) hereinsaugt; und
einer Vielzahl an Kraftstoffeinspritzventilen (128), die ein Kraftstoffgas zu dem Aktivgas, das von dem Spülanschluss (122) zu der Verbrennungskammer (140) hereingesaugt worden ist, einspritzen, um dadurch ein vorgemischtes Gas zu erzeugen,
wobei die Kraftstoffeinspritzventile (128) mit einer Vielzahl an Öffnungen versehen sind, die in einer Art und Weise vorgesehen ist, bei der sie voneinander mit einem vorbestimmten Abstand in einer Umfangsrichtung an der Innenumfangsfläche des Zylinders (110) zwischen dem Auslassanschluss (116) und dem Spülanschluss (122) beabstandet sind, und die Kraftstoffeinspritzventile (128) zumindest Folgendes aufweisen:
ein erstes Kraftstoffeinspritzventil (128a), das so aufgebaut ist, dass es ein Kraftstoffgas in eine Richtung entlang einer Wirbelströmung des Aktivgases einspritzt, das in den Zylinder (110) eingesaugt worden ist, wobei das Kraftstoffgas aus dem ersten Einspritzventil (128a) zu einer horizontalen Richtung eingespritzt wird;
**dadurch gekennzeichnet, dass**,
die Kraftstoffeinspritzventile (128) des Weiteren zumindest ein zweites Kraftstoffeinspritzventil (128b) aufweisen, das so aufgebaut ist, dass es ein Kraftstoffgas zu einer Richtung einspritzt, die näher zu einer Mittelachse des Zylinders (110) als die Richtung des Kraftstoffgases von dem ersten Kraftstoffeinspritzventil (128a) ist,
wobei das Kraftstoffgas von dem zweiten Kraftstoffeinspritzventil (128b) in eine Richtung eingespritzt wird, die nach vertikal weiter oben als die horizontale Richtung gerichtet ist.

2. Zweitaktverbrennungsmotor (100) der Art mit Spülen in einer Richtung gemäß Anspruch 1, der des Weiteren Folgendes aufweist:
eine Kraftstoffeinspritzsteuereinheit (152), die so aufgebaut ist, dass sie das Kraftstoffeinspritzventil so steuert, dass dadurch bewirkt, dass ein Kraftstoffgas von den Kraftstoffeinspritzventilen (128) eingespritzt wird,
wobei die Kraftstoffeinspritzsteuereinheit (152) so aufgebaut ist, dass sie einen Unterschied bei der Einspritzsteuerung des Kraftstoffgases zwischen dem ersten Kraftstoffeinspritzventil (128a) und dem zweiten Kraftstoffeinspritzventil (128b) bewirkt.

3. Zweitaktverbrennungsmotor (100) der Art mit Spülen in einer Richtung gemäß Anspruch 2,
wobei die Kraftstoffeinspritzsteuereinheit (152) so aufgebaut ist, dass sie einen Unterschied im Hinblick auf einen Startzeitpunkt zum Einspritzen des Kraftstoffgases zwischen dem ersten Kraftstoffeinspritzventil (128a) und dem zweiten Kraftstoffeinspritzventil (128b) steuert.

4. Zweitaktverbrennungsmotor (100) der Art mit Spülen in einer Richtung gemäß Anspruch 2 oder 3,
wobei die Kraftstoffeinspritzsteuereinheit (152) so aufgebaut ist, dass sie eine Anzahl der Kraftstoffeinspritzventile (128) variiert, die das Kraftstoffgas gemäß einer Betriebssituation des Verbrennungsmotors (100) einspritzen.

5. Zweitaktverbrennungsmotor (100) der Art mit Spülen in einer Richtung gemäß Anspruch 4,
wobei die Kraftstoffeinspritzsteuereinheit (152) so aufgebaut ist, dass,
wenn eine Last des Verbrennungsmotors (100) geringer als ein voreingestellter Grenzwert ist, dann die Kraftstoffeinspritzsteuereinheit (152) bewirkt, dass das Kraftstoffgas von dem ersten Kraftstoffeinspritzventil (128a) eingespritzt wird, und
wenn die Last des Verbrennungsmotors (100) nicht geringer als der voreingestellte Grenzwert ist, dann die Kraftstoffeinspritzsteuereinheit (152) bewirkt, dass das Kraftstoffgas von dem ersten Kraftstoffeinspritzventil (128a) und dem zweiten Kraftstoffeinspritzventil (128b) eingespritzt wird.

6. Zweitaktverbrennungsmotor (100) der Art mit Spülen in einer Richtung gemäß einem der Ansprüche 1 bis 5,
wobei eine Einspritzrichtung des Kraftstoffgases, das von dem ersten Kraftstoffeinspritzventil (128a) eingespritzt wird, und eine Einspritzrichtung des Kraftstoffgases, das von dem zweiten Kraftstoffeinspritzventil (128b) eingespritzt wird, symmetrisch in Bezug auf die Mittelachse des Zylinders (110) sind.

## Revendications

1. Moteur à deux temps de type à balayage équicourant (100) comprenant :
un cylindre (110) dans lequel est formée une chambre de combustion (140) ;
un piston (112) qui coulisse dans le cylindre (110) ;
un orifice d'échappement (116) qui est prévu au niveau d'une première extrémité du cylindre (110) dans une direction de course du piston (112) ;
une soupape d'échappement (120) qui ouvre et ferme l'orifice d'échappement (116) ;
un orifice de balayage (122) qui est prévu dans une surface circonférentielle interne d'une seconde extrémité du cylindre (110) dans la direction de course du piston (112) et aspire un gaz actif dans la chambre de combustion (140) selon un mouvement de coulissement du piston (112) ; et
une pluralité de soupapes d'injection de carburant (128) qui injectent un gaz combustible dans le gaz actif, qui a été aspiré de l'orifice de balayage (122) à la chambre de combustion (140), pour générer ainsi un gaz prémélangé,
dans lequel :
les soupapes d'injection de carburant (128) sont prévues avec une pluralité d'ouvertures prévues d'une manière espacée les unes des autres avec une distance prédéterminée dans une direction circonférentielle dans la surface circonférentielle interne du cylindre (110) entre l'orifice d'échappement (116) et l'orifice de balayage (122), et les soupapes d'injection de carburant (128) comprennent au moins :
une première soupape d'injection de carburant (128a) configurée pour injecter un gaz combustible dans une direction le long d'un écoulement tourbillonnant du gaz actif aspiré dans le cylindre (110), dans lequel le gaz combustible de la première soupape d'injection (128a) est injecté vers la direction horizontale ;
**caractérisé en ce que** :
les soupapes d'injection de carburant (128) comprennent en outre au moins une seconde soupape d'injection de carburant (128b) configurée pour injecter un gaz combustible vers une direction plus proche d'un axe central du cylindre (110) que la direction du gaz combustible de la première soupape d'injection de carburant (128a), dans lequel le gaz combustible de la seconde soupape d'injection de carburant (128b) est injecté dans une direction verticalement supérieure par rapport à la direction horizontale.

2. Moteur à deux temps de type à balayage équicourant (100) selon la revendication 1, comprenant en outre :
une unité de commande d'injection de carburant (152) configurée pour commander la soupape d'injection de carburant, pour provoquer ainsi l'injection d'un gaz combustible à partir des soupapes d'injection de carburant (128),
dans lequel l'unité de commande d'injection de carburant (152) est configurée pour provoquer une différence de commande d'injection du gaz combustible entre la première soupape d'injection de carburant (128a) et la seconde soupape d'injection de carburant (128b).

3. Moteur à deux temps de type à balayage équicourant (100) selon la revendication 2,
dans lequel l'unité de commande d'injection de carburant (152) est configurée pour commander une différence de temps de départ d'une injection du gaz de combustible entre la première soupape d'injection de carburant (128a) et la seconde soupape d'injection de carburant (128b).

4. Moteur à deux temps de type à balayage équicourant (100) selon la revendication 2 ou la revendication 3,
dans lequel l'unité de commande d'injection de carburant (152) est configurée pour modifier un nombre de soupapes d'injection de carburant (128) qui injectent le gaz combustible selon une situation opérationnelle du moteur (100).

5. Moteur à deux temps de type à balayage équicourant (100) selon la revendication 4,
dans lequel l'unité de commande d'injection de carburant (152) est configurée de sorte que si une charge du moteur (100) est inférieure à une valeur de seuil prédéterminée, alors l'unité de commande d'injection de carburant (152) provoque l'injection du gaz combustible à partir de la première soupape d'injection de carburant (128a) et si la charge du moteur (100) n'est pas inférieure à la valeur de seuil prédéterminée, alors l'unité de commande d'injection de carburant (152) provoque l'injection du gaz combustible à partir de la première soupape d'injection de carburant (128a) et de la seconde soupape d'injection de carburant (128b).

6. Moteur à deux temps de type à balayage équicourant (100) selon l'une quelconque des revendications 1 à 5,
dans lequel une direction d'injection du gaz combustible injecté à partir de la première soupape d'injection de carburant (128a) et une direction d'injection du gaz combustion injecté à partir de la seconde soupape d'injection de carburant (128b) sont symétriques par rapport à l'axe central du cylindre (110).
